# EUROPÄISCHE PATENTSCHRIFT

(11) **EP 2 600 117 B1**
(45) Veröffentlichungstag und Bekanntmachung des Hinweises auf die Patenterteilung: **10.07.2019**
(21) Anmeldenummer: 12192336.1
(22) Anmeldetag: 13.11.2012
(51) Int. Cl.: G01F 25/00, G01F 3/16, G01F 1/24, G01F 1/26

(54) **Messvorrichtung**
Measuring device
Dispositif de mesure

(30) Priorität: 29.11.2011 DE 102011087358
(43) Veröffentlichungstag der Anmeldung: 05.06.2013
(73) Patentinhaber: Deere & Company, Moline, IL 61265 (US)
(72) Erfinder: Knapp, Bernhard, 55596 Waldboeckelheim (DE); Schraml, Wolfgang, 68526 Ladenburg (DE)
(74) Vertreter: Dehnhardt, Florian Christopher

(56) Entgegenhaltungen:
- DE-U1-202010 017 036
- GB-A- 2 349 199
- US-A- 4 738 395
- US-A1- 2011 036 178

## Beschreibung

Die Erfindung betrifft eine Messvorrichtung für ein Fluidvolumen zur Verwendung in einem Hydrauliksystem, umfassend ein Leitungselement, in dem ein hydraulisches Fluid des Hydrauliksystems aufnehmbar ist, eine Übertragungsanordnung, die in dem Leitungselement entlang eines Verschiebeweges axial verschiebbar angeordnet ist, und einen berührungslosen Sensor, der in funktionaler Verbindung mit der Übertragungsanordnung steht, um eine Verschiebung der Übertragungsanordnung entlang des Verschiebeweges gegenüber dem Leitungselement zu detektieren.

Die JP 2009 236615 A zeigt eine Vorrichtung zur Füllstandserkennung von Öl in einem Öltank, die außerhalb des Tanks angeordnet ist. Die Vorrichtung besteht aus einem Glasröhrchen, in dem ein magnetischer Schwimmer von einer in dem Röhrchen sich auf und ab bewegender Ölsäule getragen wird. Eine Sensoreinheit ist auf dem Umfang des Röhrchens angebracht, um die Bewegung des Schwimmers zu erfassen.

Ein Beispiel einer Messvorrichtung für ein Fluidvolumen zur Verwendung in einem Hydrauliksystem ist auch in der Patentschrift US 2011/0036178 A1 beschrieben.

Die Aufgabe der vorliegenden Erfindung besteht darin, eine Vorrichtung bereitzustellen, mit der wie z.B. in Bremssystemen übliche und in einer begrenzten Zeitspanne fließende Volumina eines unter Druck stehenden Fluids gemessen werden können.

Die Aufgabe wird gelöst durch eine Messvorrichtung für ein Fluidvolumen zur Verwendung in einem Hydrauliksystem, umfassend ein Leitungselement, in dem ein hydraulisches Fluid des Hydrauliksystems aufnehmbar ist, eine Übertragungsanordnung, die in dem Leitungselement entlang eines Verschiebeweges axial verschiebbar angeordnet ist, und einen berührungslosen Sensor, der in funktionaler Verbindung mit der Übertragungsanordnung steht, um eine Verschiebung der Übertragungsanordnung entlang des Verschiebeweges gegenüber dem Leitungselement zu detektieren, wobei durch die Übertragungsanordnung das hydraulische Fluid in zwei Fluidsäulen unterteilbar ist, um einen Arbeitsdruck zwischen den zwei Fluidsäulen zu übertragen.

Durch die erfindungsgemäße Vorrichtung kann in einer Leitung eines Hydrauliksystems ein in kurzer Zeit fließendes Volumen eines unter Druck stehenden Hydraulikfluids gemessen werden. Beispielsweise kann die erfindungsgemäße Vorrichtung in einem hydraulischen Bremssystem für eine Validierung des Bremsventils beziehungsweise des Bremskolben eingesetzt werden. Insbesondere kann das Volumen während einer Bremsung gemessen werden, wobei der Volumenstrom während der Bremsung nicht kontinuierlich zu sein braucht und gegen Ende der Bremsung gegen Null gehen kann.

In bevorzugter Ausgestaltung ist die Übertragungsanordnung gegenüber dem Leitungselement entlang des Verschiebeweges der Übertragungsanordnung fluiddicht abgedichtet. Insbesondere ist die Übertragungsanordnung gegenüber einer Innenfläche des Leitungselements fluiddicht abgedichtet. Hierdurch wird eine hohe Messgenauigkeit sichergestellt, in dem sich die Übertragungsanordnung vollständig mit den Fluidsäulen bewegt und sich kein Fluid entlang der Übertragungsanordnung zwischen den beiden Fluidsäulen austauschen kann.

In konkreter Ausgestaltung weist die Übertragungsanordnung ein Kolbenelement auf und ist über das Kolbenelement gegenüber einer zylindrischen Innenfläche des Leitungselements abgedichtet. Von Vorteil ist hierbei, dass die Herstellung einer Kolben-Zylinder-Paarung kostengünstig und einfach darstellbar ist. Bevorzugt ist die zylindrische Innenfläche gehont und das Kolbenelement eine standardmäßige Zylinderrolle.

Bevorzugt ist das Kolbenelement mittels einer Passung gegenüber der zylindrischen Innenfläche des Leitungselements abgedichtet. Hierdurch ist gewährleistet, dass sich das Kolbenelement leichtgängig in dem Leitungselement bewegen kann und keine weiteren Abdichtungen vorgesehen werden müssen. Durch die Leichtgängigkeit der Bewegung wird wiederum gewährleistet, dass zwischen den zwei Fluidsäulen, in die das Kolbenelement das Fluid unterteilt, kein bzw. annähernd kein Druckgefälle herrscht.

Bevorzugt ist die Übertragungsanordnung in eine Überströmposition verschiebbar, zum Überströmen des hydraulischen Fluids über zumindest eine Nut in dem Leitungselement. Durch die Überstromposition und das in dieser Position mögliche Überströmen des Fluid zwischen den beiden Fluidsäulen wird ein Entlüften sichergestellt, beziehungsweise ein Blockieren verhindert, beispielsweise wenn die erfindungsgemäße Messvorrichtung in einer hydraulischen Bremse angeordnet ist. Über den Umfang sind mehrere Nuten angeordnet, beispielsweise drei Stück.

Bevorzugt ist zumindest an einem Ende des Verschiebeweges eine Überströmposition vorgesehen. Hierdurch ist gewährleistet, dass ein Entlüften oder ein Blockieren einer hydraulischen Bremse, in die die erfindungsgemäße Bremse eingesetzt sein kann, erfolgen kann, beziehungsweise vermieden wird.

In konkreter Ausgestaltung weist das Leitungselement zumindest an einem axialen Ende Anschlussmittel zum Einsetzen in ein Hydrauliksystem auf, in denen die zumindest eine Nut in Längsrichtung verlaufend angeordnet ist. Bevorzugt sind die Anschlussmittel als Verschlusskappen gestaltet. Die Anschlussmittel sind zur einen Seite mit dem Leitungselement und zur anderen Seite mit einer Hydraulikleitung verbindbar. Hierdurch kann die zumindest eine Längsnut fertigungstechnisch einfach in die Anschlussmittel, die insbesondere als Verschlusskappe ausgeführt sind, gefräst werden.

Bevorzugt handelt es sich bei dem berührungslosen Sensor um einen magnetostriktiven Sensor. Hierdurch kann eine Messung von außerhalb des Leitungselements erfolgen, so dass keine weitere Dichtfläche zwischen Sensor und Leitungselement erforderlich ist.

Bevorzugt umfasst die Übertragungsanordnung ein magnetisiertes Element. Von Vorteil ist hierbei, dass die Übertragungsanordnung aus zwei Komponenten aufgebaut ist, wobei das magnetisierte Element, welches als erste Komponente vorzugsweise als Magnet ausgebildet ist, eine Messfunktion übernimmt, und das Kolbenelement als zweite Komponente eine Dichtfunktion übernimmt.

Bevorzugt ist der Sensor in einem Abstand zu dem Leitungselement angeordnet. Hierdurch ist eine hohe Messgenauigkeit auch bei unterschiedlicher Magnetisierung des magnetisierten Elements gewährleistet.

Bevorzugt weist das magnetisierte Element eine in axialer Richtung verlaufende mittige Bohrung auf, über die das magnetisierte Element auf einem Zylinderzapfen eines Kolbenelements der Übertragungsanordnung zentriert gehalten ist. Von Vorteil ist, dass die Befestigung des magnetisierten Elements gegenüber dem Kolbenelement fertigungstechnisch einfach darstellbar ist. Insbesondere kann der Zylinderzapfen durch abdrehen des Kolbenelements hergestellt werden.

In konkreter Ausgestaltung handelt es sich bei dem magnetisierten Element um einen Ringmagneten. Von Vorteil ist hierbei, dass es sich um ein Normteil handeln kann, welches gleichzeitig bereits über eine mittige Bohrung zur Aufnahme des Zylinderzapfens des Kolbenelements verfügt.

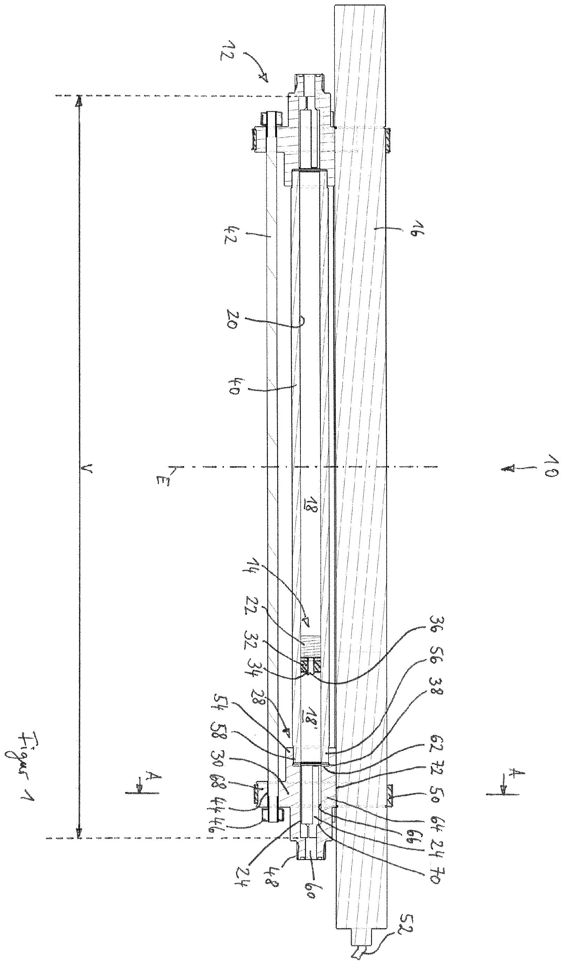

Ein bevorzugtes Ausführungsbeispiel der erfindungsgemäßen Messvorrichtung wird anhand der nachfolgenden Figuren beschrieben. Hierin zeigen
Figur 1 einen Längsschnitt durch die erfindungsgemäße Messvorrichtung und

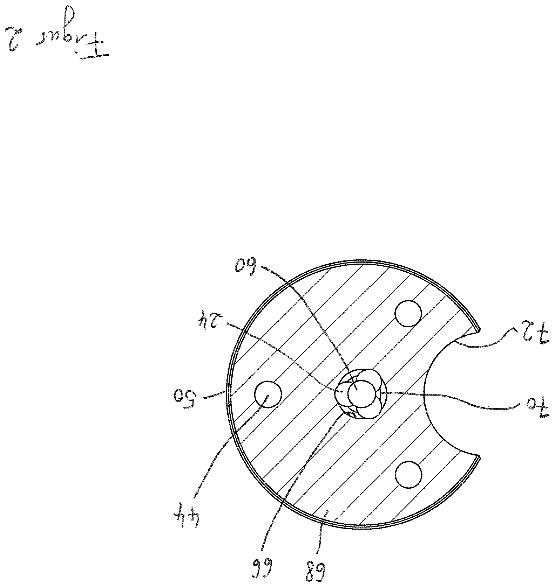

Figur 2 einen Querschnitt entlang der Schnittlinie A-A in Figur 1.

Die Figuren zeigen eine Messvorrichtung 10 bestehend aus einem Leitungselement 12 und einen berührungslosen Sensor 16. Die Messvorrichtung 10 ist mit Ausnahme der Übertragungsanordnung 14 bezüglich einer Querschnittsebene E im Wesentlichen symmetrisch aufgebaut. Insofern wird auf eine explizite Beschreibung von infolge dieser Symmetrie doppelt vorhandenen Vorrichtungsteilen verzichtet. Eine Beschreibung erfolgt nur, wenn es für das Verständnis der Erfindung erforderlich ist.

Die Messvorrichtung 10 ist in ein nicht dargestelltes Hydrauliksystem einsetzbar, beispielsweise in ein hydraulisches Bremssystem. Nach dem Einsetzen der Messvorrichtung 10 in ein Hydrauliksystem, ist ein weiter unten beschriebenes Entlüften erforderlich, so dass hiernach das Leitungselement 12 von einem Hydraulikfluid durchströmt ist und die Übertragungsanordnung 14 das Hydraulikfluid erfindungsgemäß in zwei Fluidsäulen zur Übertragung eines Arbeitsdrucks unterteilt.

Das Leitungselement 12 und der Sensor 16 sind in der beschriebenen bevorzugten Ausführung parallel zueinander angeordnet und gegeneinander befestigt. Das Leitungselement 12 umfasst ein Zylinderrohr 40 mit einer zylindrischen Innenfläche 20, in dem eine Übertragungsanordnung 14 in axialer Richtung des Zylinderrohrs 40 bewegbar ist. Die Übertragungsanordnung 14 besteht vorliegend aus einem Kolbenelement 22, das zur einen axialen Seite hin einen Zylinderzapfen 36 ausbildet, und einem magnetisiertem Element 32 in Form eines Ringmagneten. Der Ringmagnet verfügt über eine mittige Bohrung 34, über die der Ringmagnet auf den Zylinderzapfen 36 des Kolbenelements 22 aufgesteckt ist. Die Abdichtung zwischen der zylindrischen Innenfläche 20 des Zylinderrohrs 40 und dem Kolbenelement 22 erfolgt über eine gefertigte Passung, die bevorzugt eine 12F7 Passung ist. Bevorzugt ist die zylindrische Innenfläche 20 des Zylinderrohrs 40 gehont.

Der Sensor 16 ist ein magnetostriktiver Wegaufnehmer, der berührungslos die Position des magnetisierten Elements 32 in dem Zylinderrohr 40 des Leitungselements 12 erkennt. Ein Wegaufnehmer in der für dieses Ausführungsbeispiel der Erfindung geeigneten Konfiguration ist herkömmlich bekannt und beispielsweise als Typ Micropulse bei der Fa. Balluff erhältlich.

Das Leitungselement 12 umfasst weiterhin an beiden axialen Enden 28 Anschlussmittel 30 in Form von Verschlusskappen. Die Anschlussmittel 30 werden gegeneinander mittels Stehbolzen 42 und Muttern 46 derart verspannt, dass das Zylinderrohr 40 zwischen den Anschlussmitteln 30 eingeklemmt beziehungsweise verspannt ist. Hierzu weisen die Anschlussmittel 30 einen Kragen 68 auf, in dem über den Umfang verteilt und gleichmäßig beabstandet Axialbohrungen 44 vorgesehen sind. Durch die Axialbohrungen 44 ragen die Stehbolzen 42 hindurch und werden rückseitig mittels der Muttern 46 verspannt. Das Zylinderrohr 40, das Kolbenelement 22 und die Anschlussmittel 30 und gegebenenfalls weitere Einzelteile der Messvorrichtung 10 aus auf einem nichtmagnetisierbaren Material gefertigt, bevorzugt aus Edelstahl 1.4301.

Ferner weist der Kragen 68 eine radiale Ausnehmung 72 aus, zur Aufnahme des Sensors 16. Die Ausnehmung 72 ist zumindest teilkreisförmig und entspricht in ihren Durchmesser dem Außendurchmesser des Sensors 16. Die Befestigung des in der jeweiligen Ausnehmung 72 der Anschlussmittel 30 aufgenommenen Sensors 16 erfolgt bevorzugt mittels einer Schlauchschelle 50. Bevorzugt werden hierbei der Durchmesser des Kragens 68 und die Tiefe bzw. der Durchmesser der Ausnehmung 72 derart zueinander gewählt, dass zwischen dem Sensor 16 und dem Zylinderrohr 40 ein Zwischenraum von ungefähr 4mm gehalten wird.

Eine Abdichtung zwischen dem Zylinderrohr 40 und dem jeweiligen Anschlussmittel 30 erfolgt über einen Dichtring 38, der beispielsweise als Kupferring ausgeführt ist. Die Anschlussmittel 30 in Form der Verschlusskappe verfügen über einen ersten zylindrischen Abschnitt 54, mit dem die Verschlusskappe auf einen entsprechenden Bundabschnitt 56 mit einer zylindrischen Außenumfangsfläche 58 des Zylinderrohrs 40 geschoben wird, bevor eine Klemmung mittels der Stehbolzen 42 und Muttern 46 erfolgt.

Auf der von dem Zylinderrohr 40 abgewandten Seite bilden die Anschlussmittel 30 ein Anschlussgewinde 48 aus, zum Anschluss an eine nicht dargestellte Hydraulikleitung, beispielsweise eines hydraulischen Bremssystems. Bei dem Anschlussgewinde 48 handelt es sich bevorzugt um ein Außengewinde in Form einer Dash 6 Verschraubung. Zur Durchleitung von Hydraulikfluid weisen die Anschlussmittel 30 eine mittige Durchgangsbohrung 60 auf. Der erste zylindrische Abschnitt 54 geht entlang einer Schulter 62 in einen zweiten zylindrischen Abschnitt 64 mit einer zylindrischen Innenfläche 66 kleineren Durchmessers über. Der Durchmesser der zylindrischen Innenfläche 66 ist bevorzugt minimal größer als der Durchmesser der zylindrischen Innenfläche 20 des Zylinderrohrs 40. Die Übertragungsanordnung 14 ist somit ausgehend von dem Zylinderrohr 40 zu beiden axialen Seiten des Leitungselements 12 bis in die zweiten zylindrischen Abschnitte 64 der Anschlussmittel 30 entlang eines Verschiebeweges V bewegbar.

An den Enden ihres Verschiebeweges V nimmt die Übertragungsanordnung 14 jeweils eine Überströmposition ein, in der über drei Nuten 24, die in der zylindrischen Innenfläche 66 des zweiten zylindrischen Abschnitts 64 über den Umfang verteilt sind, das Hydraulikfluid an der Übertragungsanordnung 14 vorbeiströmen kann. Es kann auch eine von drei abweichende Anzahl von Nuten 24 vorgesehen sein, beispielsweise zwei sich diametral gegenüberliegende Nuten 24. In der Überströmposition liegt die Übertragungsanordnung 14 mit ihrer in Strömungsrichtung zeigenden Seite an einer Schulter 70 an, die den Übergang von der zylindrischen Innenfläche 66 des zweiten zylindrischen Abschnitts 64 zu der Durchgangsbohrung 60 bildet. Die Nuten 24 setzen sich in axialer Richtung über die Schulter 70 hinaus bis in die Durchgangsbohrung 60 hinein fort. Wenn sich die Übertragungsanordnung 14 in der Überströmposition befindet, kann die Messvorrichtung 10 entlüften werden, wenn sie in ein Hydrauliksystem eingesetzt ist. Ferner wird durch die Überströmposition sichergestellt, dass auch bei vollständiger Verschiebung der Übertragungsanordnung 14 entlang des Verschiebeweges V weiterhin Hydraulikfluid, beispielsweise einer hydraulischen Bremse, von einem Bremsventil zu einem radseitigen Bremskolben fließen kann.

Mit der erfindungsgemäßen Messvorrichtung 10 wird ein Volumensensor zur Erfassung kleiner und unter Druck stehender Fluidvolumina bereitgestellt. Bei der Messung wird das Kolbenelement 22 in dem Zylinderrohr 40 verschoben und über das an das Kolbenelement 22 gekoppelte magnetisierte Element 32 der Verschiebeweg durch den berührungslosen Sensor 16 erfasst. Über die bekannte Querschnittsfläche des Zylinderrohres 40 ergibt sich das verschobene Volumen des Fluids.

### Bezugszeichenliste

- 10: Messvorrichtung
- 12: Leitungselement
- 14: Übertragungsanordnung
- 16: Sensor
- 18, 18': Fluidsäule
- 20: Innenfläche
- 22: Kolbenelement
- 24: Nut
- 28: axiales Ende
- 30: Anschlussmittel
- 32: magnetisiertes Element
- 34: Bohrung
- 36: Zylinderzapfen
- 38: Dichtring
- 40: Zylinderrohr
- 42: Stehbolzen
- 44: Axialbohrung
- 46: Mutter
- 48: Anschlussgewinde
- 50: Schlauchschelle
- 52: Anschlusskabel
- 54: zylindrischer Abschnitt
- 56: Bundabschnitt
- 58: zylindrischen Außenumfangsfläche
- 60: Durchgangsbohrung
- 62: Schulter
- 64: zylindrischer Abschnitt
- 66: zylindrische Innenfläche
- 68: Kragen
- 70: Schulter
- 72: Ausnehmung
- V: Verschiebeweg
- E: Querschnittsebene

## Patentansprüche

1. Messvorrichtung (10) für ein Fluidvolumen zur Verwendung in einem Hydrauliksystem, umfassend ein Leitungselement (12), in dem ein hydraulisches Fluid des Hydrauliksystems aufnehmbar ist, eine Übertragungsanordnung (14), die in dem Leitungselement (12) entlang eines Verschiebeweges (V) axial verschiebbar angeordnet ist, und einen berührungslosen Sensor (16), der in funktionaler Verbindung mit der Übertragungsanordnung (14) steht, um eine Verschiebung der Übertragungsanordnung (14) entlang des Verschiebeweges (V) gegenüber dem Leitungselement (12) zu detektieren, wobei durch die Übertragungsanordnung (14) das hydraulische Fluid in zwei Fluidsäulen (18, 18') unterteilbar ist, um einen Arbeitsdruck zwischen den zwei Fluidsäulen (18, 18') zu übertragen, wobei das Leitungselement (12) an beiden axialen Enden (28) Anschlussmittel (30) umfasst, die zur Durchleitung von hydraulischem Fluid eine mittige Durchgangsbohrung (60) aufweisen, **dadurch gekennzeichnet,**
**dass** die Übertragungsanordnung (14) an den Enden ihres Verschiebeweges (V) in eine Überströmposition verschiebbar ist, zum Überströmen des hydraulischen Fluids über zumindest eine Nut (24) in dem Leitungselement (12), wobei die Nut sich in axialer Richtung bis in die Durchgangsbohrung (60) hinein fortsetzt.

2. Messvorrichtung (10) nach Anspruch 1, **dadurch gekennzeichnet,**
**dass** die Übertragungsanordnung (14) gegenüber dem Leitungselement (12) entlang des Verschiebeweges (V) der Übertragungsanordnung (14) fluiddicht abgedichtet ist.

3. Messvorrichtung (10) nach Anspruch 1 oder 2, **dadurch gekennzeichnet,**
**dass** die Übertragungsanordnung (14) ein Kolbenelement (22) aufweist und über das Kolbenelement (22) gegenüber einer zylindrischen Innenfläche (20) des Leitungselements (12) abgedichtet ist.

4. Messvorrichtung (10) nach Anspruch 3, **dadurch gekennzeichnet,**
**dass** das Kolbenelement (22) mittels einer Passung gegenüber der zylindrischen Innenfläche (20) des Leitungselements (12) abgedichtet ist.

5. Messvorrichtung (10) nach einem der Ansprüche 1 bis 5, **dadurch gekennzeichnet, dass** zumindest an einem Ende des Verschiebeweges (V) eine Überströmposition vorgesehen ist.

6. Messvorrichtung (10) nach einem der Ansprüche 1 bis 5, **dadurch gekennzeichnet,**
**dass** das Leitungselement (12) zumindest an einem axialen Ende (28) Anschlussmittel (30) zum Einsetzen in ein Hydrauliksystem aufweist, in denen die zumindest eine Nut (24) in Längsrichtung verlaufend angeordnet ist.

7. Messvorrichtung (10) nach einem der Ansprüche 1 bis 6, **dadurch gekennzeichnet, dass** es sich bei dem berührungslosen Sensor (16) um einen magnetostriktiven Sensor handelt.

8. Messvorrichtung (10) nach einem der Ansprüche 1 bis 7, **dadurch gekennzeichnet, dass** die Übertragungsanordnung (14) ein magnetisiertes Element (32) umfasst.

9. Messvorrichtung (10) nach einem der Ansprüche 1 bis 8, **dadurch gekennzeichnet**, das der Sensor (16) in einem Abstand zu dem Leitungselement (12) angeordnet ist.

10. Messvorrichtung (10) nach Anspruch 9, **dadurch gekennzeichnet, dass** das magnetisierte Element (32) eine in axialer Richtung verlaufende mittige Bohrung (34) aufweist, über die das magnetisierte Element (32) auf einem Zylinderzapfen (36) des Kolbenelements (22) der Übertragungsanordnung (14) zentriert gehalten ist.

11. Messvorrichtung nach Anspruch 9 oder 10, **dadurch gekennzeichnet,**
**dass** es sich bei dem magnetisierten Element (32) um einen Ringmagneten handelt.

## Claims

1. Measurement device (10) for a fluid volume for use in a hydraulic system, comprising a line element (12) in which a hydraulic fluid of the hydraulic system is able to be received, a transmission arrangement (14) which is arranged in the line element (12) so as to be axially displaceable along a displacement path (V), and a contactless sensor (16) which is functionally connected to the transmission arrangement (14) in order to detect a displacement of the transmission arrangement (14) along the displacement path (V) with respect to the line element (12), wherein the hydraulic fluid is able to be subdivided into two fluid columns (18, 18') by the transmission arrangement (14) in order to transmit a working pressure between the two fluid columns (18, 18'), wherein the line element (12) comprises, at both axial ends (28), connection means (30), which have a central passage bore (60) for conducting hydraulic fluid, **characterized in that** the transmission arrangement (14) is, at the ends of the displacement path (V) thereof, able to be displaced into a flow transfer position, for the purpose of the flow transfer of the hydraulic fluid via at least one groove (24) in the line element (12), wherein the groove continues in an axial direction as far as the passage bore (60).

2. Measurement device (10) according to Claim 1, **characterized in that** the transmission arrangement (14) is sealed off in a fluid-tight manner with respect to the line element (12) along the displacement path (V) of the transmission arrangement (14).

3. Measurement device (10) according to Claim 1 or 2, **characterized in that** the transmission arrangement (14) has a piston element (22) and is sealed off with respect to a cylindrical inner surface (20) of the line element (12) via the piston element (22).

4. Measurement device (10) according to Claim 3, **characterized in that** the piston element (22) is sealed off with respect to the cylindrical inner surface (20) of the line element (12) by means of a fit.

5. Measurement device (10) according to one of Claims 1 to 5, **characterized in that** a flow transfer position is provided at least at one end of the displacement path (V).

6. Measurement device (10) according to one of Claims 1 to 5, **characterized in that** the line element (12) has, at least at one axial end (28), connection means (30) for insertion into a hydraulic system, in which means the at least one groove (24) is arranged so as to extend in a longitudinal direction.

7. Measurement device (10) according to one of Claims 1 to 6, **characterized in that** the contactless sensor (16) is a magnetostrictive sensor.

8. Measurement device (10) according to one of Claims 1 to 7, **characterized in that** the transmission arrangement (14) comprises a magnetized element (32) .

9. Measurement device (10) according to one of Claims 1 to 8, **characterized in that** the sensor (16) is arranged at a distance from the line element (12).

10. Measurement device (10) according to Claim 9, **characterized in that** the magnetized element (32) has a central bore (34) which extends in an axial direction and via which the magnetized element (32) is held centred on a cylinder journal (36) of the piston element (22) of the transmission arrangement (14) .

11. Measurement device according to Claim 9 or 10, **characterized in that** the magnetized element (32) is an annular magnet.

## Revendications

1. Dispositif (10) de mesure d'un volume de fluide destiné à être utilisé dans un système hydraulique, le dispositif comprenant un élément de conduit (12) dans lequel un fluide hydraulique du système hydraulique peut être reçu, un ensemble de transmission (14) qui est disposé dans l'élément de conduit (12) de manière à pouvoir coulisser axialement sur un trajet de coulissement (V) et un capteur sans contact (16) qui est en liaison fonctionnelle avec l'ensemble de transmission (14) pour détecter un coulissement de l'ensemble de transmission (14) sur le trajet de coulissement (V) par rapport à l'élément de conduit (12), le fluide hydraulique pouvant être divisé en deux colonnes de fluide (18, 18') par l'ensemble de transmission (14) afin de transférer une pression de travail entre les deux colonnes de fluide (18, 18'), l'élément de conduit (12) comprenant aux deux extrémités axiales (28) un moyen de raccordement (30) qui comporte un trou traversant central (60) destiné au passage de fluide hydraulique, **caractérisé en ce que**
l'ensemble de transfert (14) peut être amené par coulissement dans une position de débordement aux extrémités de son trajet de coulissement (V) pour faire déborder le fluide hydraulique par au moins une gorge (24) ménagée dans l'élément de conduit (12), la gorge se poursuivant dans la direction axiale jusque dans le trou traversant (60).

2. Dispositif de mesure (10) selon la revendication 1, **caractérisé en ce que** l'ensemble de transmission (14) est rendu étanche aux fluides par rapport à l'élément de conduit (12) sur le trajet de coulissement (V) de l'ensemble de transmission (14).

3. Dispositif de mesure (10) selon la revendication 1 ou 2, **caractérisé en ce que** l'ensemble de transmission (14) comporte un élément formant piston (22) et est rendu étanche par rapport à une surface intérieure cylindrique (20) de l'élément de conduit (12) par l'élément formant piston (22) .

4. Dispositif de mesure (10) selon la revendication 3, **caractérisé en ce que** l'élément formant piston (22) est rendu étanche par rapport à la surface intérieure cylindrique (20) de l'élément de conduit (12) au moyen d'un ajustement.

5. Dispositif de mesure (10) selon l'une des revendications 1 à 5, **caractérisé en ce qu'**une position de débordement est prévue au moins à une extrémité du trajet de coulissement (V).

6. Dispositif de mesure (10) selon l'une des revendications 1 à 5, **caractérisé en ce que** l'élément de conduit (12) comporte au moins à une extrémité axiale (28) des moyens de raccordement (30) qui sont destinés à être insérés dans un système hydraulique et dans lesquels l'au moins une gorge (24) est ménagée de manière à s'étendre dans la direction longitudinale.

7. Dispositif de mesure (10) selon l'une des revendications 1 à 6, **caractérisé en ce que** le capteur sans contact (16) est un capteur magnétostrictif.

8. Dispositif de mesure (10) selon l'une des revendications 1 à 7, **caractérisé en ce que** le dispositif de transmission (14) comprend un élément magnétisé (32).

9. Dispositif de mesure (10) selon l'une des revendications 1 à 8, **caractérisé en ce que** le capteur (16) est disposé à distance de l'élément de conduit (12).

10. Dispositif de mesure (10) selon la revendication 9, **caractérisé en ce que** l'élément magnétisé (32) comporte un alésage central (34) s'étendant dans la direction axiale et permettant de maintenir l'élément magnétisé (32) centré sur un pivot cylindrique (36) de l'élément formant piston (22) du dispositif de transmission (14).

11. Dispositif de mesure selon la revendication 9 ou 10, **caractérisé en ce que** l'élément magnétisé (32) est un aimant annulaire.
